# DEMANDE DE BREVET EUROPEEN

(11) **EP 0 592 273 A2**
(43) Date de publication de la demande: **13.04.1994**
(21) Numéro de dépôt: 93402343.3
(22) Date de dépôt: 24.09.1993
(51) Int. Cl.: B60N 2/20, B60N 2/32, B60R 22/26

(54) **Siège pour véhicule comprenant un dossier partiellement mobile**

(30) Priorité: 05.10.1992 FR 9211774
(71) Demandeur: HOBBYCAR S.A., F-41400 Thenay (FR)
(72) Inventeur: Wardavoir, François, F-41120 Cellettes (FR)

(57) **Abrégé**

La partie supérieure (6, 7, 8, 9, 35, 36) du dossier est mobile entre une position sensiblement verticale permettant à un passager de s'asseoir sur le siège et une position sensiblement horizontale dans laquelle cette partie (6, 7, 8, 9, 35, 36) est basculée vers l'avant.

Le siège comprend une ceinture de sécurité dont l'enrouleur (10) est au moins en partie noyé dans la partie mobile (6, 7, 8, 9, 35, 36) du dossier. Une boucle de renvoi (40) de la ceinture est fixée à l'armature (6, 7, 8, 9) de la partie mobile du dossier et les deux points d'attache inférieurs (12, 13) de la ceinture sont fixés à l'armature de l'assise (1, 2, 3, 4) de part et d'autre du siège.

Utilisation notamment pour les véhicules de loisir du type monospace ou décapotable.

## Description

La présente invention vise un siège pour véhicule comportant une assise et un dossier dont au moins la partie supérieure est mobile.

Il est courant de munir les sièges pour véhicule automobile d'un dossier rabattable. A ce titre, le présent demandeur a proposé dans le brevet français n° 2 620 395 en date du 6 juillet 1990 un véhicule muni de sièges comportant un dossier rabattable comprenant une partie télescopique. Lorsqu'il est rabattu horizontalement, ce dossier a la fonction d'une porte qui vient obturer la partie supérieure d'un emplacement de passager.
L'emplacement est donc protégé des intempéries, des regards et des vols. En outre, la surface horizontale ainsi constituée peut faire partie d'un plan horizontal plus vaste sur toute la partie supérieure du véhicule et procurer une surface de chargement.

On connaît également des sièges pour véhicule munis d'une ceinture intégrée, c'est-à-dire comprenant d'une part un enrouleur noyé dans une partie du siège et d'autre part les attaches et boucle de renvoi nécessaires à la mise en place de la ceinture sur le passager.

Pour protéger le passager efficacement sans que l'action de la ceinture soit elle-même dangereuse, des normes existent au plan international, qui réglementent les zones d'implantation des deux attaches inférieures et de la boucle de renvoi. La sévérité de ces normes réduit considérablement la marge de manoeuvre des concepteurs de siège et d'habitacle, dissuadant ceux-ci de proposer des innovations majeures concernant l'emplacement de la ceinture de sécurité.

Les sièges pour automobile connus jusqu'à présent ont donc notamment pour inconvénient de ne pas présenter conjointement les deux caractéristiques précitées, à savoir dossier mobile et ceinture intégrée. Cet inconvénient est particulièrement regrettable pour les véhicules du type monospace qui comprennent souvent un siège isolé au centre de l'habitacle, un peu en retrait des sièges avant et devant les sièges arrières. Le souci d'une sécurité optimale conduit a priori à munir ces sièges d'une ceinture intégrée et à ne pas autoriser la mobilité du dossier. On empêche ainsi les passagers de la voiture de disposer grâce au dossier rabattu d'un plan horizontal pouvant par exemple faire office de table.

La présente invention propose donc de pallier ces inconvénients en proposant un siège pour véhicule comprenant une assise et un dossier dont au moins la partie supérieure est mobile entre une position sensiblement verticale permettant à un passager de s'asseoir sur le siège et une position sensiblement horizontale dans laquelle la partie supérieure du dossier est basculée vers l'avant.

Selon l'invention, le siège comprend une ceinture de sécurité dont l'enrouleur est au moins en partie noyé dans la partie mobile du dossier, une boucle de renvoi de la ceinture étant fixée à l'armature de la partie mobile du dossier, les deux points d'attache inférieurs de la ceinture étant fixés à l'armature de l'assise, de part et d'autre du siège.

L'invention procure ainsi conjointement les avantages de confort liés à une ceinture intégrée et à un dossier rabattable. De plus, cette innovation a lieu dans le respect des normes de sécurité.

Selon une version avantageuse de l'invention la partie mobile du dossier est articulée par rapport au siège au moyen d'un axe de rotation et le siège comprend un dispositif de blocage de la partie mobile du dossier comportant d'une part une pièce rigide fixée à l'armature de l'assise, une partie de cette pièce ayant la forme d'une portion de disque qui a pour axe ledit axe de rotation et qui présente une encoche, et d'autre part un cliquet articulé à l'armature de la partie mobile du dossier et pouvant être engagé dans ladite encoche afin d'immobiliser la partie mobile du dossier en position sensiblement verticale.

De cette façon on améliore la sécurité du passager installé sur le siège en empêchant le basculement vers l'avant de la partie mobile du siège en cas de choc frontal ou de freinage brusque.

Selon une version préférée de l'invention, le siège est amovible. Le siège est fixé au véhicule au moyen d'au moins deux systèmes de fixation amovibles respectivement disposés en partie avant et arrière du siège, les commandes d'ouverture des systèmes de fixation étant reliées par une sangle permettant l'ouverture simultanée des systèmes de fixation par action d'une seule des commandes d'ouverture.

Par ces moyens on augmente la facilité de maniement et de rangement du siège, sans pour autant réduire la sécurité du passager. En effet, le siège est muni de deux systèmes de fixation et donc convenablement fixé au véhicule, et ces deux systèmes de fixation peuvent être déverrouillés en même temps par la commande d'un seul d'entre-eux.

Selon une autre version avantageuse de l'invention, la partie inférieure du dossier étant rigidement fixée à l'assise, le système de fixation placé à l'arrière du siège est fixé à l'armature de la partie inférieure du dossier, au voisinage de la partie mobile du dossier. De la sorte, la fixation du siège à l'habitacle se trouve ainsi améliorée, l'un des systèmes de fixation du siège étant placé au dos de celui-ci. On obtient ainsi une bonne répartition des efforts en cas d'accident et notamment en cas de choc du véhicule par l'arrière.

Selon une autre version préférée de l'invention, le sommet du dossier comporte un arceau rigidement fixé à l'armature du dossier et s'élevant à une hauteur sensiblement supérieure au sommet de la tête du passager assis sur le siège.

Cet arceau améliore encore la sécurité du passager car il protège celui-ci en cas de retournement complet du véhicule. Dans ces circonstances, la tête du passager ne vient donc pas heurter violemment le sol.

Selon une autre version avantageuse de l'invention, ladite partie mobile du dossier est télescopique de façon à pouvoir allonger celui-ci. En outre, le siège comprend un dispositif agencé pour que la partie mobile télescopique du dossier se déploie automatiquement lorsque cette partie mobile est basculée en position sensiblement horizontale. De plus, dans cette position, la partie mobile du dossier vient obturer la partie supérieure d'un emplacement de passager. L'obturation de cet emplacement est facilitée par le déploiement automatique de la partie télescopique du dossier du siège dès le basculement de celle-ci en position horizontale.

D'autres caractéristiques et avantages de l'invention apparaîtront encore dans la description qui va suivre d'une réalisation préférée de l'invention, donnée à titre d'exemple non limitatif.

Aux dessins annexés :
- la figure 1 présente en vue de face l'armature du siège selon l'invention, le système de fixation du siège à l'habitacle et le dispositif d'attache de la ceinture ;
- la figure 2 est une vue de droite du siège représenté à la figure 1 ;
- la figure 3 est une vue en perspective montrant le détail D de la figure 2 ;
- la figure 4 montre en vue de face la partie supérieure du siège selon l'invention avec la partie télescopique et le dispositif de déploiement de celle-ci ; et
- la figure 5 présente en vue de droite le siège de la figure 4, la partie supérieure du dossier étant rabattue en position horizontale.

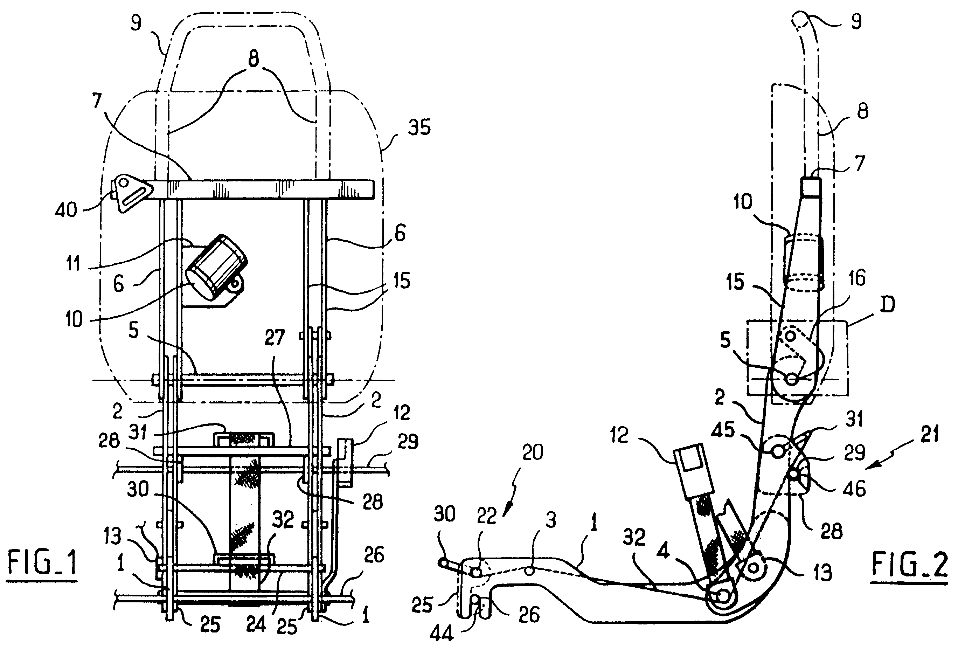

Les figures 1 et 2 présentent l'armature du siège selon l'invention. L'armature est symétrique par rapport au plan transversal de symétrie du siège et est entièrement métallique, par exemple en acier.

La partie inférieure de l'armature soutient l'assise du siège et la partie inférieure du dossier. Elle comprend de chaque côté un longeron inférieur horizontal 1 relié rigidement à un double col de cygne 2 sensiblement vertical. Les deux longerons gauche et droit 1 sont reliés entre eux à l'avant du siège par une traverse avant 3 et à l'arrière du siège par une traverse arrière 4. Cette traverse 4 relie également entre eux les deux doubles cols de cygne 2, lesquels sont reliés en partie supérieure par un tube axial 5 formant axe de rotation de la partie supérieure mobile du dossier du siège.

La partie supérieure de l'armature comporte deux doubles montants 6 situés dans le prolongement des doubles cols de cygne 2, ces deux doubles montants 6 étant mobiles en rotation autour du tube axial 5. Les doubles montants 6 sont reliés en partie supérieure par un tube d'armature 7 à section carrée. Sur celui-ci sont fixés deux supports d'arceau 8 qui s'étendent jusqu'au sommet du siège. Un arceau 9 est fixé à leur extrémité.

L'ensemble de l'armature supérieure, à savoir les doubles montants 6, le tube 7, les supports 8 et l'arceau 9, est donc mobile en rotation autour de l'axe 5 entre une position sensiblement verticale dans laquelle il constitue l'armature du dossier du siège permettant à un passager de s'asseoir sur le siège et une position sensiblement horizontale dans laquelle la partie supérieure du dossier est rabattue vers l'avant du siège.

Le dispositif de ceinture de sécurité comprend tout d'abord un enrouleur 10 fixé sur un support d'enrouleur 11, lui-même fixé au double montant gauche 6 de l'armature supérieure du siège. Une fois que l'armature du siège a été recouverte des éléments, notamment de la mousse, permettant l'installation confortable du passager, l'enrouleur 10 se trouve entièrement noyé dans la partie mobile du dossier du siège. Le dispositif comprend d'autre part une boucle de renvoi 40 fixée à l'extrémité gauche du tube d'armature 7. La ceinture et la boucle de ceinture de modèle classique n'ont pas été représentées.

La boucle de ceinture vient se loger dans le dispositif d'attache classique 12. Le support de ce dispositif 12 est fixé à la partie inférieure du double col de cygne droit 2 de l'armature inférieure du siège. Le dispositif d'attache 12 s'élève jusqu'au niveau de la hanche du passager installé sur le siège, comme il est bien connu. L'extrémité inférieure de la ceinture est reliée par la fixation 13 à la partie inférieure du double col de cygne gauche.

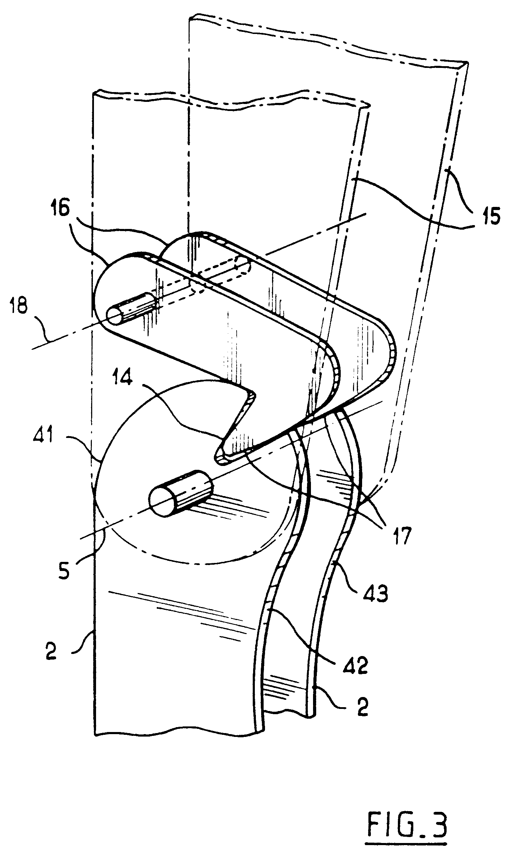

On va maintenant décrire à l'aide de la figure 3, le dispositif de blocage de la partie mobile du dossier représenté au niveau du détail D de la figure 2.

La partie supérieure 41 du double col de cygne droit 2, placée au voisinage du tube axial 5 a la forme d'une portion de disque. Chaque élément 42 et 43 du double col de cygne 2 présente en partie supérieure arrière une encoche 14. Chaque double montant 6 est composé de deux plaques allongées 15, représentés en trait mixte sur la figure 3 pour plus de clarté, convenablement reliées entre elles au moyen de jonctions non représentées. Un axe 18 traverse les deux plaques allongées 15. Cet axe commun aux deux plaques est situé sensiblement au-dessus de l'extrémité du double col de cygne 2. Un cliquet 16 est disposé contre chaque plaque allongée 15 et articulé en rotation autour de l'axe 18. Les deux cliquets sont situés en regard l'un de l'autre. Chaque cliquet 16 comporte une pointe 17 agencée pour pouvoir être engagée dans l'encoche 14 de l'élément 42, 43 du col de cygne 2 lorsque la partie supérieure mobile du dossier du siège est en position verticale.

De cette façon les cliquets 16 bloquent la rotation du double montant 6 autour du tube axial 5, c'est-à-dire qu'ils bloquent la rotation de la partie supérieure de l'armature du siège autour du tube axial 5. Ainsi la partie mobile du dossier du siège ne peut plus basculer vers l'avant.

Pour permettre le basculement vers l'avant de la partie supérieure du dossier du siège, on désengage les pointes 17 des cliquets 16 des fentes 14.

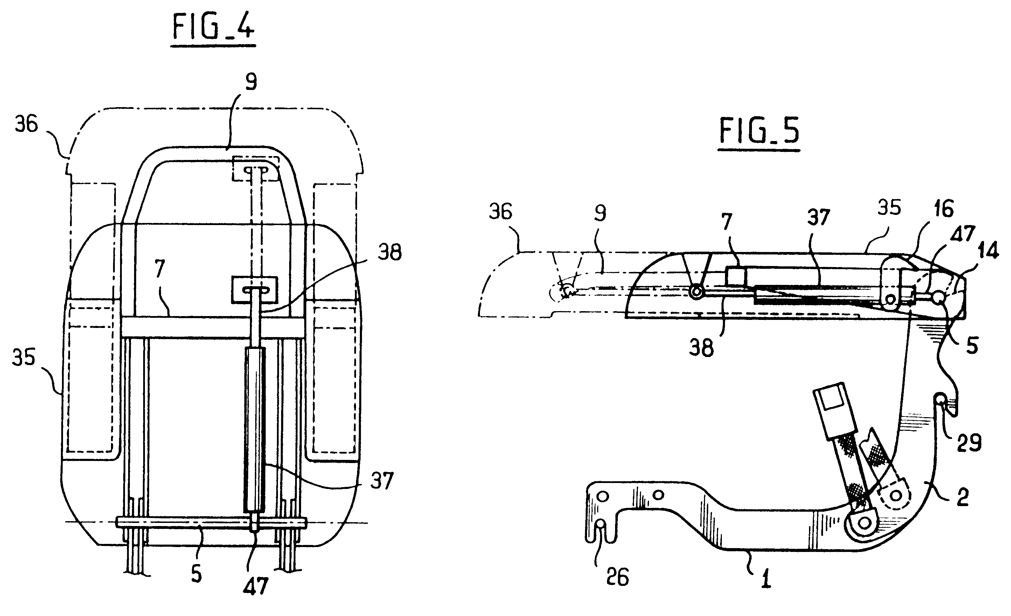

La figure 5 montre la partie mobile du dossier du siège rabattue vers l'avant en position horizontale, les pointes 17 étant désengagées des fentes 14 du double col de cygne 2.

Bien entendu, dans une autre version de l'invention, il est possible de munir les deux double montants 6 de l'armature supérieure de deux cliquets 16 pour renforcer le blocage de la partie mobile du dossier du siège.

Le siège est fixé de façon amovible au plancher de l'habitacle du véhicule. Pour cela, deux systèmes de fixation 20 et 21 sont utilisés. Le système de fixation 20 est situé à l'avant des longerons 1 et le système de fixation 21 est situé en partie arrière des double cols de cygne 2, comme le montrent les figures 1 et 2.

Le système de fixation 20 se compose en premier lieu de deux encoches 44 verticales dirigées vers le bas pratiquées dans la partie inférieure des extrémités des longerons 1. Un axe de verrouillage 22 matérialisé par une barre relie les deux extrémités des longerons 1 au-dessus de l'encoche 44 précitée. Un tube 24 est monté en rotation autour de l'axe de verrouillage 22. Il présente à ses extrémités deux pattes formant crochet 25. Lorsque le siège est disposé dans l'habitacle, de façon que les encoches 44 s'engagent sur une tige de verrouillage 26 fixé au plancher de l'habitacle, les pattes formant crochet 25 sont adaptées pour pouvoir être engagées sous la tige 26 de façon à bloquer celle-ci au fond des encoches 44. De la sorte, la partie avant du siège est fixée à l'habitacle du véhicule.

De même, le système de verrouillage arrière comporte quatre encoches 46 verticales dirigées vers le bas pratiquées en partie arrière des doubles cols de cygne 2 et un axe de verrouillage arrière 45 matérialisé par une barre joignant les deux double-cols de cygne 2. Sur cet axe de verrouillage est monté en rotation un tube de verrouillage 27 comportant à ses extrémités deux pattes formant crochet 28.

L'habitacle du véhicule comprend également une tige 29 sur laquelle peuvent être engagées les encoches 46 des cols de cygne 2. Les pattes formant crochet 28 sont agencées pour pouvoir se replier sous la tige 29 de façon à empêcher le retrait de la tige 29.

Les encoches 44 et 46 qui sont engagées sur les tiges de verrouillage 26 et 29 sont verticales et orientées vers le bas. De la sorte, l'installation du siège s'effectue par un mouvement naturel vertical de haut en bas du siège.

Deux poignées respectives 30, 31 permettent de manoeuvrer les tubes de verrouillage 24 et 27. Ces poignées constituent les commandes d'ouverture des systèmes de fixation 20 et 21. La rotation de la poignée 30 entraîne la rotation du tube de verrouillage 24 et la rotation des pattes formant crochet 25 libérant ainsi la tige de verrouillage avant 26. Il en est de même pour le système de fixation arrière.

Une sangle 32 relie les deux poignées 30 et 31. La sangle 32 est fixée à la poignée 30, passe sous le tube de verrouillage 24, puis au-dessus de la traverse avant 3, sous la traverse arrière 4, au-dessus de la tige de verrouillage arrière 29 et arrive à la poignée 31 à laquelle elle est fixée . La sangle est disposée de façon à être tendue sans excès entre les deux poignées.

Par ce dispositif, l'action de la poignée 30 provoque la manoeuvre simultanée de l'autre poignée 31.

Des ressorts de rappel non représentés sont convenablement disposés pour remettre en position les tubes de verrouillage et pattes formant crochets avants et arrières après libération ou après fixation du siège sur le plancher de l'habitacle.

L'arceau de sécurité 9, placé au sommet de la partie supérieure de l'armature du siège, c'est-à-dire au sommet de la partie mobile du dossier, s'étend à une hauteur sensiblement supérieure au sommet de la tête du passager assis sur le siège. De cette façon, en cas de retournement accidentel du véhicule, lors d'un virage trop brusque par exemple, le passager n'est pas écrasé contre le sol par la voiture située au-dessus de lui. En effet, l'arceau 9 est solidaire de l'armature du siège et, par les deux systèmes de fixation 20 et 21, solidaire du châssis du véhicule.

Si le véhicule se retourne, l'impact du choc et le poids du véhicule sont encaissés par l'arceau 9 et l'armature du siège. Le passager ne se trouve donc pas écrasé sous le poids du véhicule.

Sur la figure 4, une coquille 35 est fixée en partie arrière de l'armature de la partie mobile du dossier du siège. Cette coquille 35 forme la face arrière du siège. La coquille 35 présente en partie supérieure une rallonge 36 rendant celle-ci télescopique. Une partie de la rallonge 36 est mobile par coulissement à l'intérieur de la coquille 35 par un système classique de glissières.

L'arceau 9 demeure immobile. La rallonge 36 comporte des évidements et des nervures lui permettant de coulisser sans être gênée par l'arceau 9.

Un ressort pneumatique 37 est disposé dans la coquille 35. Le ressort 37 est relâché lorsque sa tige mobile 38 est étendue. Il est relié par son extrémité fixe 47 au tube axial 5. La tige mobile 38 du ressort 37 est reliée à la surface intérieure de la rallonge 36.

Un dispositif de verrouillage non représenté permet de bloquer le ressort pneumatique 37 en position comprimée. Le dispositif de verrouillage est agencé pour libérer l'action du vérin, c'est-à-dire étendre la tige 38 lorsque la partie mobile du dossier du siège est basculée vers l'avant à l'horizontal. De cette façon, la rallonge 36 de la coquille 35 s'étend automatiquement lorsqu'on passe la partie mobile du dossier du siège de la position verticale à la position horizontale.

Lorsque l'habitacle du véhicule est prévu pour comporter des emplacements individuels de passager, comme les emplacements décrits dans le brevet français précité n° 2 620 395 en date du 06/07/1990, la coquille 35 prolongée par la rallonge 36 forme en position horizontale une porte venant obturer la partie supérieure de l'emplacement de passager. L'emplacement de passager est alors inaccessible et à l'abri des regards et des intempéries.

Cette obturation peut naturellement être rendue étanche en munissant la partie avant de la coquille 35 d'un ensemble de joints d'étanchéité convenablement disposés.

Bien entendu, un système de verrouillage approprié peut être prévu pour bloquer la partie supérieure du dossier du siège en position rabattue sur un emplacement de passager et interdire de la relever à la verticale.

L'armature du siège qui vient d'être décrite sera bien sûr munie de différents éléments (tôle, tissu, mousse, ...) pour constituer un siège confortable.

Le siège qui vient d'être décrit procure de nombreux avantages.

En premier lieu, il est amovible. On peut donc ôter le siège pour libérer l'emplacement de passager, de façon à pouvoir y disposer des bagages. Les tiges de fixation avant 26 et arrière 29 peuvent être disposées en double exemplaire dans chaque emplacement de passager de façon à pouvoir placer le siège dans deux positions, une première position dans laquelle le passager regarde vers l'avant du véhicule et une seconde position dans laquelle le passager regarde vers l'arrière.

Le fait que le siège soit muni d'une ceinture intégrée permet une économie de place et augmente la liberté de mouvement du passager. Elle contribue également à faciliter la mise en place et l'extraction du siège de l'emplacement de passager.

Le fait de pouvoir clore en partie supérieure un emplacement de passager au moyen de la partie supérieure mobile du dossier du siège rabattue à l'horizontale, permet de mettre l'intérieur de l'emplacement à l'abri des regards indiscrets, des vols et des intempéries.

La partie télescopique du dossier du siège permet de disposer d'un emplacement de passager spacieux en partie supérieure sans que la surface du dossier du siège formant porte de cet emplacement soit exagérément étendue.

Le siège selon l'invention procure ce confort et ces avantages d'utilisation tout en préservant la sécurité du passager.

La ceinture intégrée empêche le passager d'être projeté vers l'avant en cas de freinage brusque ou de choc frontal.

Le dispositif de blocage de la partie supérieure mobile du dossier du siège permet en cas de freinage la transmission intégrale des efforts du dossier vers la partie inférieure de l'armature du siège. De cette façon la partie supérieure mobile du dossier du siège reste fixe même en cas de choc frontal violent.

Les deux systèmes de fixation de l'armature du siège au plancher de l'emplacement de passager assurent une fixation solide du siège à l'habitacle du véhicule tout en permettant une extraction simplifiée du siège lorsque celui-ci doit être ôté ou retourné, grâce à l'ouverture simultanée des deux systèmes par action d'une seule commande d'ouverture.

L'arceau placé en partie supérieure du siège protège le passager du poids du véhicule en cas de retournement de celui-ci. En effet, dans ce cas, la transmission des efforts et notamment du poids du véhicule s'effectue par le biais de l'habitacle, de l'armature inférieure du siège, de l'armature supérieure du siège et enfin de l'arceau.

Enfin, les points d'attache inférieurs et la boucle de renvoi supérieure de la ceinture de sécurité correspondent aux zones d'emplacement autorisées par les normes internationales régissant la disposition des dispositifs de sécurité pour véhicules.

Bien entendu, on pourra proposer de nombreuses modifications et améliorations du siège selon l'invention. On pourra notamment varier la structure ou la forme de l'armature du siège.

## Revendications

1. Siège pour véhicule comprenant une assise (1, 2, 3, 4) et un dossier (2, 4, 5, 6, 7, 8, 9, 35, 36) dont au moins la partie supérieure (6, 7, 8, 9, 35, 36) est mobile entre une position sensiblement verticale permettant à un passager de s'asseoir sur le siège et une position sensiblement horizontale dans laquelle la partie supérieure (6, 7, 8, 9, 35, 36) du dossier est basculée vers l'avant, caractérisé en ce que le siège comprend une ceinture de sécurité dont l'enrouleur (10) est au moins en partie noyé dans la partie mobile (6, 7, 8, 9, 35, 36) du dossier, une boucle de renvoi (40) de la ceinture étant fixée à l'armature (6, 7, 8, 9) de la partie mobile du dossier, les deux points d'attache inférieurs (12, 13) de la ceinture étant fixés à l'armature de l'assise (1, 2, 3, 4), de part et d'autre du siège.

2. Siège conforme à la revendication 1, la partie mobile (6, 7, 8, 9, 35, 36) du dossier étant articulée par rapport au siège au moyen d'un axe de rotation (5), caractérisé en ce qu'il comprend un dispositif de blocage de la partie mobile du dossier comportant d'une part une pièce rigide (2) fixée à l'armature de l'assise (1, 2, 3, 4), une partie (41) de cette pièce (2) ayant la forme d'une portion de disque qui a pour axe ledit axe de rotation (5) et qui présente une encoche (14), et d'autre part un cliquet (16) articulé à l'armature (6, 7, 8, 9) de la partie mobile du dossier et pouvant être engagé dans ladite encoche (14) afin d'immobiliser la partie mobile du dossier en position sensiblement verticale.

3. Siège conforme à la revendication 2, caractérisé en ce que le dispositif de blocage comporte deux pièces rigides (2) identiques et deux cliquets (16) identiques, répondant à la définition de la revendication 2, situés respectivement et mutuellement en regard l'un de l'autre.

4. Siège conforme à l'une des revendications 1 à 3, caractérisé en ce que le siège est amovible.

5. Siège conforme à la revendication 4, caractérisé en ce que le siège est fixé au véhicule au moyen d'au moins deux systèmes de fixation amovibles (20, 21) respectivement disposés en partie avant et arrière du siège, les commandes d'ouverture (30, 31) des systèmes de fixation étant reliées par une sangle (32) permettant l'ouverture simultanée des systèmes de fixation (20, 21) par action d'une seule (30) des commandes d'ouverture (30, 31).

6. Siège conforme à la revendication 5, la partie inférieure (2, 4, 5) du dossier étant rigidement fixée à l'assise, caractérisé en ce que le système de fixation (21) placé à l'arrière du siège est fixé à l'armature de la partie inférieure (2, 4, 5) du dossier, au voisinage de la partie mobile (6, 7, 8, 9) du dossier.

7. Siège conforme à l'une des revendications 1 à 7, caractérisé en ce que le sommet du dossier comporte un arceau (9) rigidement fixé à l'armature (2, 4, 5, 6, 7, 8, 9) du dossier et s'élevant à une hauteur sensiblement supérieure au sommet de la tête du passager assis sur le siège.

8. Siège conforme à l'une des revendications 1 à 7, caractérisé en ce que ladite partie mobile (6, 7, 8, 9, 35, 36) du dossier est télescopique de façon à pouvoir allonger celui-ci.

9. Siège conforme à la revendication 9, caractérisé en ce que le siège comprend un dispositif agencé pour que la partie mobile télescopique (6, 7, 8, 9, 35, 36) du dossier se déploie automatiquement lorsque cette partie mobile est basculée en position sensiblement horizontale.

10. Siège conforme à l'une des revendications 1 à 9, caractérisé en ce que lorsque la partie mobile du dossier (6, 7, 8, 9, 35, 36) est placée en position sensiblement horizontale, elle vient obturer la partie supérieure d'un emplacement de passager.
